# EUROPEAN PATENT APPLICATION

(11) **EP 1 672 338 A2**
(43) Date of publication of application: **21.06.2006**
(21) Application number: 05257792.1
(22) Date of filing: 16.12.2005
(51) Int. Cl.: G01J 3/10

(54) **Lighting device**

(30) Priority: 18.12.2004 GB 427748; 16.06.2005 GB 512256; 20.09.2005 GB 519120
(71) Applicant: Optilume Ltd., International Development Centre Valley Drive Ilkley, LS29 8PB (GB)
(72) Inventor: Fowler, James, Ilkley, LS29 8PB (GB)
(74) Representative: Tomkinson, Alexandra

(57) **Abstract**

A lighting device (2) is provided. The lighting device (2) includes a housing (4,6,10,12,14,16) having at least one light emitting diode (LED) (32,34) for illuminating a suitable area and a viewing aperture for allow a user to view said suitable area using said device. The light emitted from the LED being arranged at approximately 45 degrees relative to the viewing aperture (18). The LED is configured to emit light approximating to a noon-day light spectrum.

## Description

This application relates to a lighting device.

Although the following description refers almost exclusively to a lighting device for use in dental applications, it will be appreciated by persons skilled in the art that the present invention can be used in any number of applications as a source of illumination, such as for example in photography, macrophotography and/or the like

Illumination of teeth in dental applications is important, particularly in dental restoration applications where the colour of the material being used to repair the teeth has to be closely matched with the patient's teeth being repaired. Conventionally, such colour matching is performed by taking the patient to a daylight source, such as a window and matching a ceramic or other repair material with the patient's teeth. The technician or dentist undertaking this procedure will try to obtain a light source of a particular daylight standard, such as for example 5500 Kelvin (measure of colour temperature) which is generally held to be a standard which most closely corresponds to "noon" daylight or the level of daylight at the brightest point in a day. However, it will be appreciated that this method is susceptible to error and is typically dependent on factors such as the time of day at which the colour matching is undertaken, the amount of daylight available and/or the like. In addition, it is inconvenient to have to restrict colour matching to particular times of the day. If the colour matching is incorrect the patient may have dentures, fillings and/or the like which do not match the remainder of their teeth, which can be aesthetically displeasing and distressing to the patient.

One method currently used to overcome this problem is to use a fluorescent daylight source, such as a lighting cabinet incorporating one or more fluorescent light sources therein. However, a problem with such lighting cabinets is that they do not produce light comparable to daylight or to the standard "noon daylight". In addition, the fluorescent light sources have to heat up for a pre-determined period of time before the light being emitted therefrom is a stable colour and the light bulbs used to provide the fluorescent light source have a limited lifespan. As such, these conventional devices allow inaccuracies to be generated in the colour matching or shade taking in dental applications.

It is therefore an aim of the present invention to provide a lighting device which provides a more accurate illumination source, and particularly but not necessarily exclusively to a device which more accurately provides a light source corresponding to a daylight standard.

It is a further aim of the present invention to provide a method of tuning a light source to increase the accuracy of illumination therefrom.

According to a first aspect of the present invention there is provided a lighting device, said lighting device including a housing having a viewing aperture for allowing a user to view a required area and at least one LED provided in or associated with said housing for illuminating said required area, said LED configured to emit light having a spectrum that approximates to a noon-day light spectrum, and wherein the light emitted from the at least one LED is orientated at approximately 45 degrees with respect to the viewing aperture.

Preferably the viewing aperture is provided at a substantially neutral angle or at zero degrees in the device.

The lighting device typically includes a housing and the at least one LED and viewing aperture are typically provided in said housing. However, the at least one LED and viewing aperture can be provided in separate housings if required.

In one embodiment at least one LED is provided either side of said viewing aperture, such as for example at opposite sides of said viewing aperture. The light emitted from each LED is typically provided at an angle of approximately 45 degrees with respect to said viewing aperture. Thus, the light emitted from an LED on one side is typically is directed towards the light emitting from an LED on the opposite side. The provision of LEDs on each side of the viewing aperture avoids "specular reflection" which occurs when the reflection of light hides the colour of an object a user is trying to view.

Preferably the one or more LEDs are provided at an angle of approximately 45 degrees relative to a substantially central axis of said viewing aperture.

The viewing aperture can include any or any combination of one or more windows, magnifying glass, lens, substantially transparent cover, glass, plastic and/or the like.

The housing in which the at least one LED is located typically includes cooling means to prevent overheating of the housing and/or LED. The cooling means can include any or any combination of one or more fans, heatsinks, vents, fins, apertures and/or the like.

The lighting device of the present invention can be battery powered or powered via a mains power supply.

In a preferred embodiment the one or more light sources include one or more different coloured light emitting diodes (LEDs). A single colour LED light source typically does not generate a correct noon daylight spectrum. Thus, in accordance with the present invention, the LEDs are "tuned" so as to provide a spectrum more closely resembling a normal daylight spectrum or a required daylight standard. This tuning is undertaken using a combination of blue LEDs and/or red LEDS with white LEDs. The white LEDs typically provide light at 5000K and the blue and/or Red LEDs can take the light to a suitable standard, such as 5500K the standard associated with "noon daylight", or 6500K. Thus, the blue and/or red LEDs improve the colour rendering index.

The present invention can include a combination of blue and white LEDS; red and white LEDs; or blue, red and white LEDs.

Further preferably the one or more LEDs include at least one blue LED, at least one red LED and at least one white LED.

Any number of blue and white LEDs can be provided as the light source but preferably the ratio of blue:white LEDs is equal or constant (i.e. 1:1 or 2:2 etc). The ratio of white:red LEDs is preferably equal or constant (i.e. 1:1 or 2:2). The ratio of blue:red:white LEDs is preferably equal or constant (i.e. 1:1, 2:2 etc).

In an alternative embodiment any ratio of white, red and/or blue LEDs can be provided.

The LEDs are typically located close together in the lighting device and blending means, such as a diffuser, can be used to blend the light to form an appropriate illumination beam. The blended light beam is typically at approximately 45 degrees with respect to the viewing aperture.

The level of DC or AC current passing through the blue and/or red LEDs can be varied until the desired light spectrum is achieved which, for example most closely resembles a normal daylight spectrum. This can be undertaken at the point of manufacturer and/or switching means or user actuation means can be provided to allow a user to switch or vary the light settings to one or more required or pre-determined values, to one or more daylight standards such as "noon daylight", "northern daylight" and/or the like.

The current can be varied through the blue and/or red LED using any suitable electrical circuitry and/or other device. The output can be measured by a spectroradiometer to determine the correct or required colour indexing. The current can be varied using switching means to allow a user to switch the device between known pre-determined values and/or user determined values.

Preferably one or more potentiometers and/or variable resistors are used to vary the current through one or more of the LEDs.

One or more switches can be used to allow the device to be switched between different pre-determined levels of current being supplied to the one or more LEDs.

In one embodiment the current supplied through the at least one white LED is provided via a first electrical circuit and the current supplied through the at least one red LED and/or at least one blue LED is provided via a second electrical circuit. The first and second electrical circuits can be separate to each other. The circuitry is preferably provided in the housing of the device.

In one embodiment at least one red LED and at least one blue LED are arranged in parallel in a circuit. Each LED typically communicates with current varying means, such as for example, a variable resistor or potentiometer.

Preferably a ganged switched is used in the circuit. The ganged switch in one example allows three electrical contacts to be changed substantially simultaneously.

Preferably the device can be switched between 5500K colour index and 6500K colour index. This is particularly advantageous since in normal lighting devices, the colour index is fixed and the present invention allows the colour indexing to be changed to a user required level or between pre-determined levels.

When reference is made to "noon-daylight" sunlight spectrums, this can also include values between approximately 5200-5800 Kelvin and/or from approximately 6200-6800 Kelvin. Further preferably "noon-daylight" sunlight spectrums include values approximately equal to 5500K and/or 6500K.

According to a second aspect of the present invention there is provided a method of tuning a light source in a lighting device, said lighting device including a housing having a viewing aperture for allowing a user to view a required area and at least one white LED and at least one blue and/or red LED provided in or associated with said housing for illuminating said required area, said method including the steps of varying an electrical current passing through at least one blue LED and/or red LED provided in said device until a desired colour spectrum is achieved.

According to a further aspect of the present invention there is provided a lighting device, said lighting device including a housing having a viewing aperture for allowing a user to view a required area and at least one LED provided in or associated with said housing for illuminating said required area, said LED configured to emit light having a spectrum that approximates to 5200K-5800K and/or 6200K-6800K, and wherein the light emitted from the at least one LED is orientated at approximately 45 degrees with respect to the viewing aperture.

According to a yet further aspect of the present invention there is provided a method of analyzing a colour of a dental restoration, said method including the steps of illuminating a dental restoration and a tooth of a patient with at least one LED configured to emit a light beam having a spectrum that approximates to a noon-day sunlight spectrum, viewing the dental restoration and tooth and comparing the colour of the dental restoration with the colour of the tooth.

According to a yet further aspect of the present invention there is provided a method of analyzing colour of different material, said method including the steps of illuminating a first composition and a second composition with at least one LED configured to emit a light beam having a spectrum that approximates to a noon-day sunlight spectrum, viewing a first colour of the first composition and a second colour of the second composition under the light beam and comparing the first colour with the second colour.

The present invention has the advantage that the arrangement of the light source and geometry of the same is such so as to provide accurate illumination, and typically without specular reflection. The LEDs used in the lighting device generally have a substantially longer lifespan than other light sources. For example, the LEDs used in the present invention can last for up to 100,000 hours of operation. The light emitted from the LEDs does not decay over time and the LEDs do not require a pre-determined period of time before use to allow the light source to warm up before stable light is produced, as is the case with prior art lighting devices.

In addition, the colour rendering index produced by the present invention is significantly improved compared to conventional devices and the resulting light spectrum more closely resembles 5500K in one embodiment and/or 5500K and/or 6500K in a further embodiment.

The present invention has particular advantageous applications in dentistry and macrophotography. In the latter embodiment, the illumination device can be attached to or integrally formed with a camera.

Embodiments of the present invention will now be described with reference to the accompanying figures, wherein:
Figure 1 is a front view of a lighting device according to one aspect of the present invention;
Figure 2 is a cross sectional view of the lighting device in figure 1;
Figure 3 is a rear view of the lighting device in figure 1;
Figure 4 is a side view of the lighting device in figure 1;
Figure 5 is an end view of the lighting device in figure 1;
Figure 6 illustrates a conventional fluorescent daylight spectrum;
Figure 7 illustrates a daylight spectrum;
Figure 8 illustrates a corrected daylight spectrum using the method of the present invention in one embodiment; and
Figure 9 illustrates an example of the electronic circuitry used for a lighting device which can be switched between two different colour indexes.

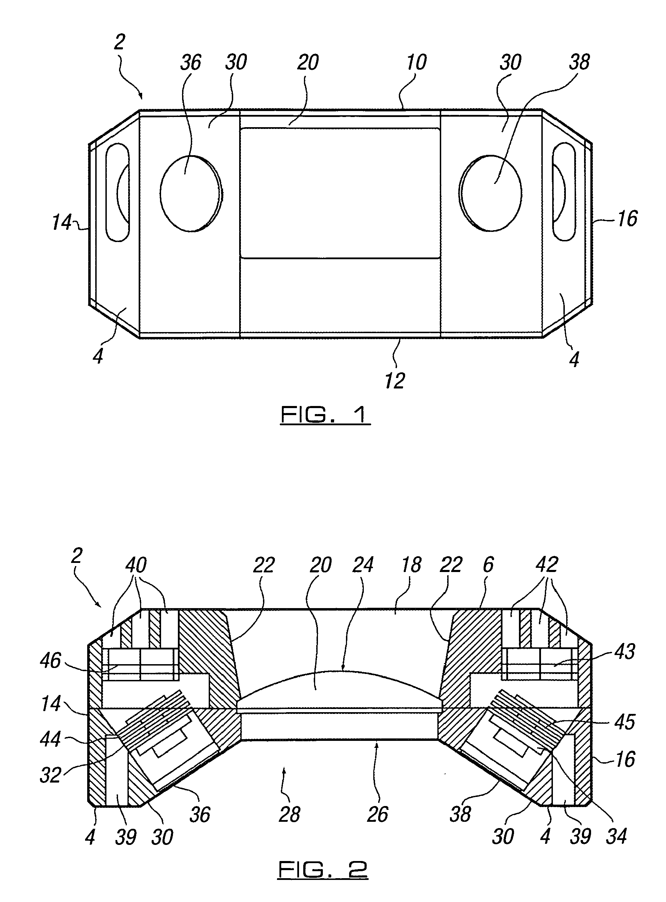

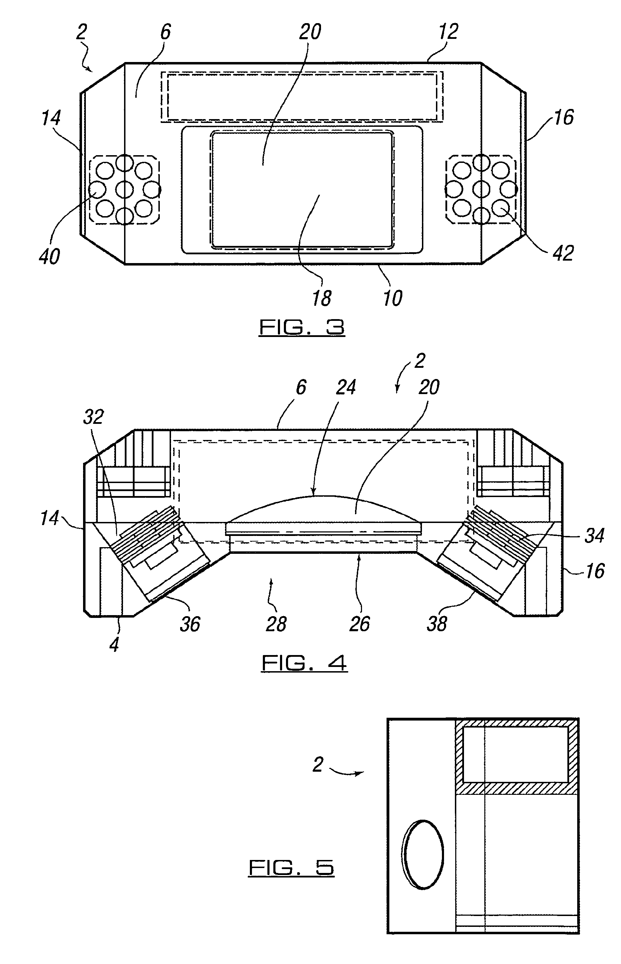

Referring firstly to figures 1-5, there is illustrated a lighting device 2 suitable for use in shade taking or colour matching for restoration purposes in dentistry.

The device 2 includes a housing having a front surface 4, rear surface 6, side walls, 10, 12 and end walls 14, 16. The device is relatively compact and can be hand held and/or can be attached to suitable support means.

A recess 18 is defined in rear surface 6 and viewing means in the form of a magnifying lens 20 is located therein. The side walls 22 defining recess 18 are tapered inwardly away from rear surface 8 so as to increase the ease with which a user can look through lens 20.

Lens 20 typically has a convex surface 24 facing rear surface 6 and a substantially flat or planar surface 26 facing front surface 4. The lens engages with the housing via any suitable means.

A further recess 28 is defined in front surface 4. The side walls 30 of recess 28 have a narrowing taper away from front surface 4. More specifically, side walls 30 are provided at an angle of 45 degrees with respect to planar surface 26 of lens 20.

Two light sources 32, 34 are provided in the housing on either side of lens 20. Apertures 36, 38 are defined in each of side walls 30 to allow light from the light sources to be emitted therefrom in the direction of front surface 4. The light beam emitted from the light sources 32, 34 is arranged at approximately 45 degrees with respect to a central axis of the viewing means or viewing aperture. The light beams from the two light sources typically cross over each other at a point in front of front surface 4 providing there is no obstruction in the way.

In this described embodiment, each light source includes a plurality of white LEDs and a plurality of blue LEDs in a ratio of 1:1. A diffuser can be located in or over apertures 36, 38 so as to blend the light emitted from the plurality of LEDs. The LEDs in this example are arranged at spaced apart intervals in a required pattern.

Each light source also includes cooling means in the form of an air inlet channel 39 to allow the flow of air into the lighting device adjacent each light source 32, 34, and an air outlet in the form of a plurality of apertures 40, 42 provided on rear surface 6 for the dissipation of heat from the housing. Heat transfer means in the form of a heat sink 44 is provided between the air inlet and air outlet to receive heat generated by the light source and a fan 46 is provided to generate forced air cooling to cause cool air to flow into the device and heated air to be exhausted from the device. The heat sink can be in the form of a fanned metal sheet arrangement or any other suitable arrangement. The heat is typically dissipated partly from the rear 6 of the housing and partly from the front of the housing but can be dissipated from any suitable surface.

In use, the device is held relative to an object to be viewed, which in this example is a patient's teeth, and the colour of a material, such as ceramic, which is to be used to repair the teeth is shade matched against the patient's own teeth. This allows a more accurate means for shade taking, thereby ensuring the correct colour of repair material is used to repair the patient's teeth. The patient, a technician and/or dentist can hold the lighting device as required. Thus, the device of the present invention can be used to undertake a comparison of the colour of at least two different objects and/or compositions. A user undertakes the colour comparison by looking directly through the viewing means or viewing aperture in the housing and the light sources provide a required light spectrum to allow the correct colour comparison to be undertaken.

During manufacture of lighting device 2, the blue LEDs are "tuned" until a suitable light spectrum is produced by the combination of the white and blue LEDS which closely resembles normal daylight. The blue LEDs are tuned by changing the intensity of illumination produced by the blue LEDs until the desired spectrum is obtained. This tuning takes place by varying the DC current passing through the blue LEDs until the desired spectrum is achieved.

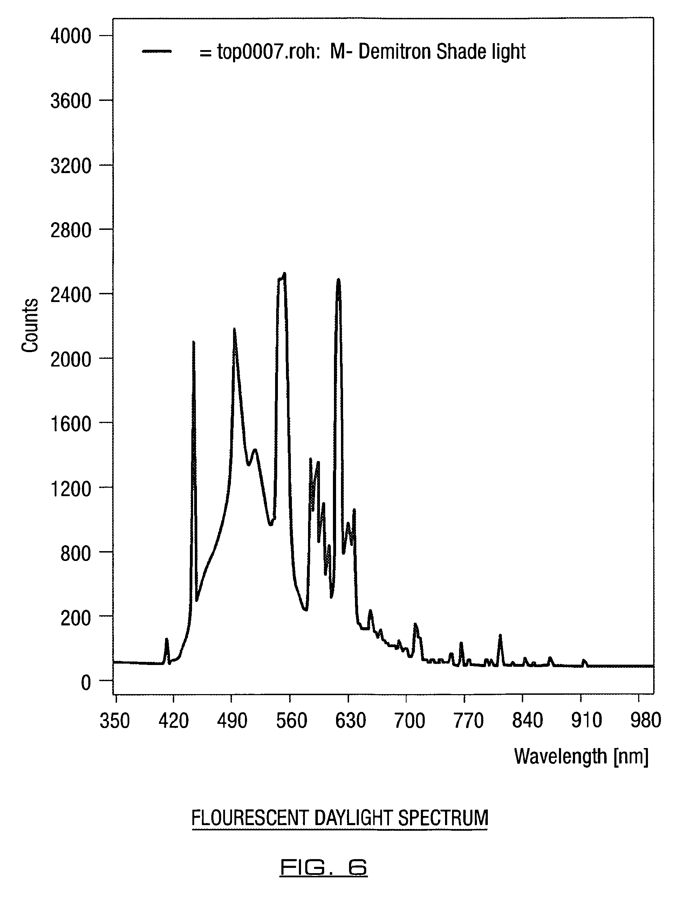

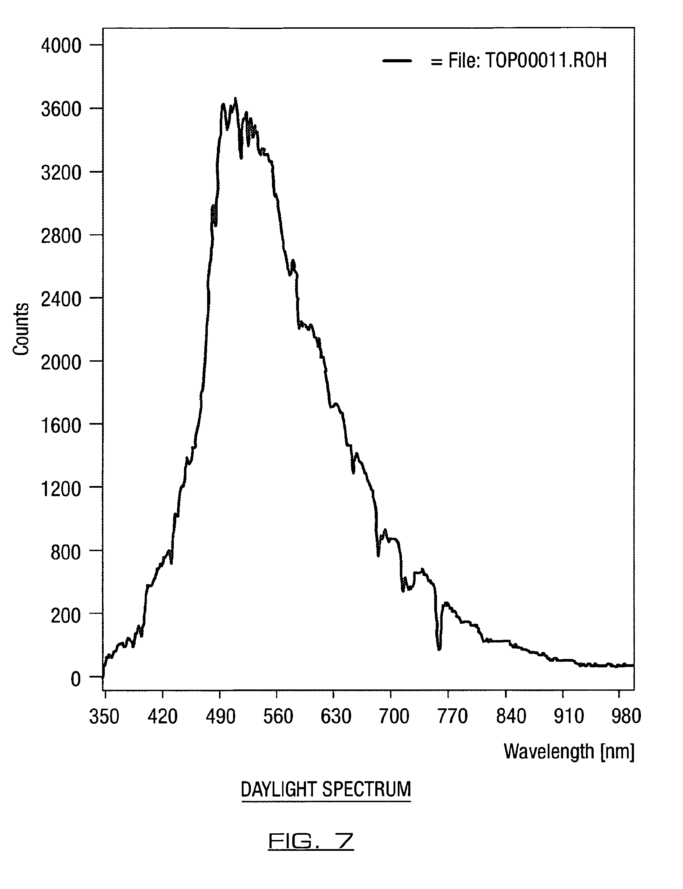

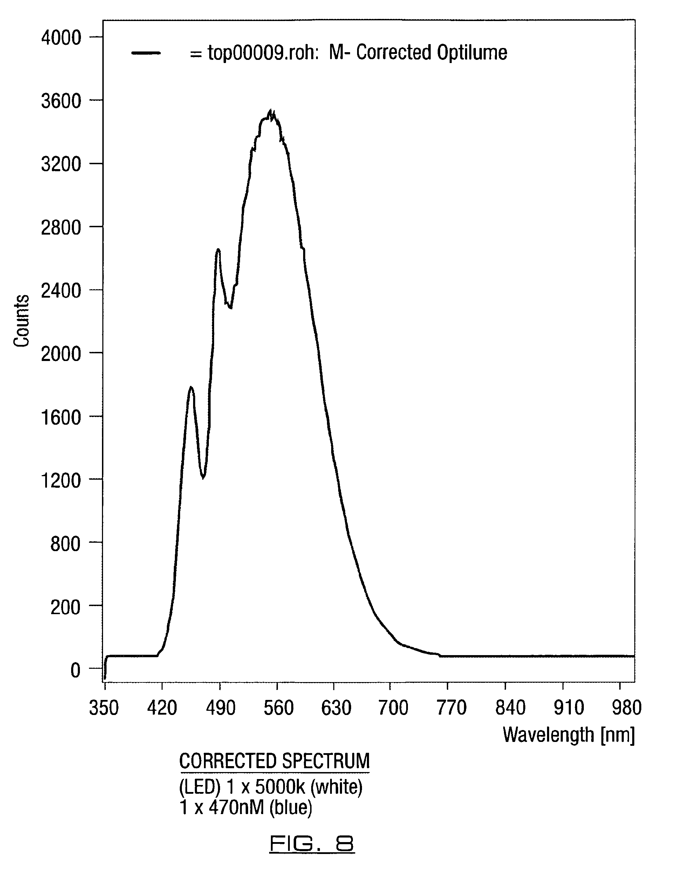

Figure 7 illustrates a normal daylight spectrum, with the counts of light along the Y-Axis and the wavelength of light (nm) along the X-Axis. The corrected light spectrum which can be produced in the lighting device of the present invention using the above described method of tuning the blue LEDs is shown in figure 8. This spectrum includes a combination of white light of wavelength 5000K and blue light of wavelength 470nm. It can be seen the close resemblance of the light spectrum in figure with figure 7, compared to the light spectrum produced for a conventional fluorescent daylight source, shown in figure 6.

In a further example of the present invention, a red LED is provided in combination with the white and blue LEDs to improve the accuracy of the desired wavelength of light being achieved (i.e. 5500K in this example) and to improve the colour rendering index. A similar method to that described above is used to correct the light spectrum. The red LED typically has a peak wavelength of 627nm. Thus, the blue LED provides a correction peak wavelength less than that of white light and the red LED provides a correction peak wavelength above that of white light.

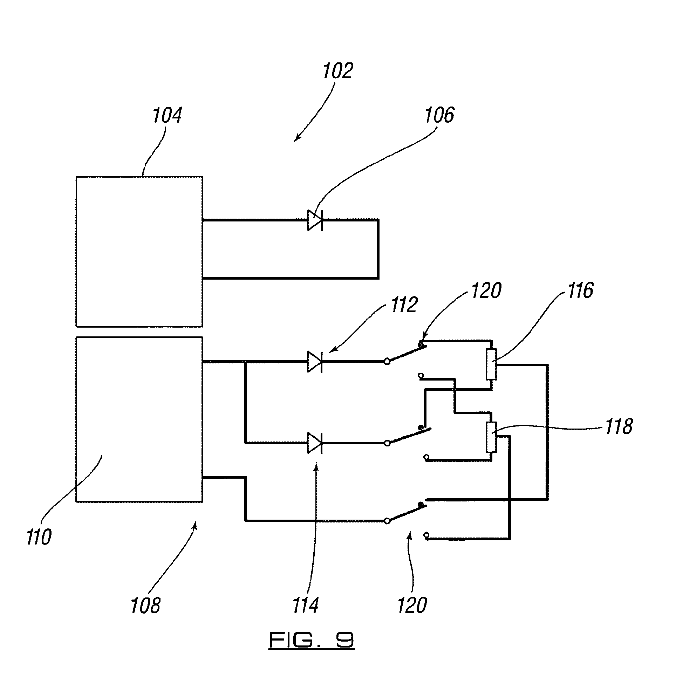

Referring to figure 9, there is illustrated an example of electronic circuitry for use in a lighting device according to one embodiment of the present invention. The circuitry allows the lighting device to be switched by a user between two different colour indexing values, such as 5500K and 6500K. A suitable switch or user actuation means is provided on the exterior of the housing to allow the user to switch between the different colour indexing values.

The circuitry includes a first circuit 102 having a power source 104 and a white LED 106. The white LED is typically powered at the full intensity of the power source 104. A second circuit 108 includes a power source 110 connected to a blue LED 112 and a red LED 114 in parallel. Each LED 112, 114 is connected to a variable resistor 116, 118 in series. A ganged switch 120 is provided between the LEDs and the variable resistors and between the resistors and the power source. The ganged switch allows switching of three contact switches substantially simultaneously, thereby allowing the current through the red and blue LEDs to be varied between two pre-determined levels. By varying the current through the red and blue LEDs in combination with the white LED, the desired colour index of the lighting device is obtained.

Any or any combination of the abovementioned features can be used in the present invention.

Thus, the present invention uses LEDs as a light source for shade taking and/or for providing a more accurate daylight illumination source.

## Claims

1. A lighting device, said lighting device including a housing having a viewing aperture for allowing a user to view a required area and at least one LED provided in or associated with said housing for illuminating said required area, said LED configured to emit light having a spectrum that approximates to a noon-day light spectrum, and wherein the light emitted from the at least one LED is orientated at approximately 45 degrees with respect to the viewing aperture.

2. A lighting device according to claim 1 wherein at least one LED is provided either side of the viewing aperture, the light emitted from either side being orientated at approximately 45 degrees with respect to the viewing aperture.

3. A lighting device according to claim 1 wherein the viewing aperture includes a magnifying glass, a lens or substantially transparent cover.

4. A lighting device according to claim 1 wherein cooling means are provided in the housing for cooling said at least one LED.

5. A lighting device according to claim 4 wherein the cooling means includes any or any combination of one or more fans, heatsinks, vents, fins and/or apertures.

6. A lighting device according to claim 1 wherein the at least one LED include at least one white LED, together with one or more red LEDs and/or blue LEDs.

7. A lighting device according to claim 6 wherein the combination of the LEDs produces light at approximately 5500K or 6500K.

8. A lighting device according to claim 6 wherein the ratio of white LEDs to blue and/or red LEDs is 1:1.

9. A lighting device according to claim 1 wherein a plurality of LEDs are located adjacent to each other and blending means are provided to form an illumination beam.

10. A lighting device according to claim 9 wherein the blending means is a diffuser.

11. A lighting device according to claim 6 wherein the level of current passing through the blue and/or red LEDs can be varied to allow a desired light spectrum to be achieved.

12. A lighting device according to claim 11 wherein the desired light spectrum is achieved in the device at the point of manufacture.

13. A lighting device according to claim 11 wherein switching means or user actuation means are provided to allow a user to switch or vary the level of current to achieve the desired light spectrum.

14. A lighting device according to claim 11 wherein a spectroradiometer is used to determine the correct or required colour indexing or light spectrum.

15. A lighting device according to claim 11 wherein one or more potentiometers and/or variable resistors are used to vary the current passing through the one or more LEDs.

16. A lighting device according to claim 6 wherein the current supplied through the at least one white LED is provided via a first circuit and the current supplied through the at least one blue and/or red LEDs is provided via a second circuit.

17. A lighting device according to claim 16 wherein at least one blue LED and at least one red LED are arranged in parallel in a circuit, each LED communicating with current varying means.

18. A lighting device according to claim 16 wherein a ganged switch is used in the electrical circuit.

19. A method of tuning a light source in a lighting device, said lighting device including a housing having a viewing aperture for allowing a user to view a required area and at least one white LED and at least one blue and/or red LED provided in or associated with said housing for illuminating said required area, said method including the steps of varying an electrical current passing through at least one blue LED and/or red LED provided in said device until a desired colour spectrum is achieved.

20. A lighting device, said lighting device including a housing having a viewing aperture for allowing a user to view a required area and at least one LED provided in or associated with said housing for illuminating said required area, said LED configured to emit light having a spectrum that approximates to 5200K-5800K and/or 6200K-6800K, and wherein the light emitted from the at least one LED is orientated at approximately 45 degrees with respect to the viewing aperture.

21. A method of analyzing a colour of a dental restoration, said method including the steps of illuminating a dental restoration and a tooth of a patient with at least one LED configured to emit a light beam having a spectrum that approximates to a noon-day sunlight spectrum, viewing the dental restoration and tooth and comparing the colour of the dental restoration with the colour of the tooth.

22. A method of analyzing colour of different material, said method including the steps of illuminating a first composition and a second composition with at least one LED configured to emit a light beam having a spectrum that approximates to a noon-day sunlight spectrum, viewing a first colour of the first composition and a second colour of the second composition under the light beam and comparing the first colour with the second colour.
